Europäisches Patentamt

European Patent Office

Office européen des brevets

(11) Veröffentlichungsnummer: **0 285 035**
**A2**

(12) **EUROPÄISCHE PATENTANMELDUNG**

(21) Anmeldenummer: **88104881.3**

(22) Anmeldetag: **25.03.88**

(51) Int. Cl.4: **H02J 13/00**

(30) Priorität: **31.03.87 DE 3710675**

(43) Veröffentlichungstag der Anmeldung:
**05.10.88 Patentblatt 88/40**

(84) Benannte Vertragsstaaten:
**AT BE CH DE LI NL SE**

(71) Anmelder: **Siemens Aktiengesellschaft Berlin und München**
**Wittelsbacherplatz 2**
**D-8000 München 2(DE)**

(72) Erfinder: **Wenk, Jürgen**
**Dortmunder Strasse 57**
**D-8500 Nürnberg(DE)**
Erfinder: **Schendel, Claus, Dipl.-Ing.**
**Bierlachweg 20**
**D-8520 Erlangen(DE)**

(54) **Anordnung zum Schalten eines Elektrogerätes in Abhängigkeit von einem jeweils gültigen Tarif.**

(57) Mit der erfindungsgemäßen Anordnung soll eine Vergleichmäßigung des Energieverbrauchs erreicht werden, indem der Verbraucher dazu angehalten wird, den Verbrauch elektrischer Energie möglichst in Schwachlastzeiten zu verlegen. Dabei soll keine ständige Beobachtung des jeweiligen Tarifs erforderlich sein.

Diese Aufgabe wird dadurch gelöst, daß die Anordnung eine Anzeigevorrichtung (6) für den jeweils gültigen Tarif aufweist und daß die Anordnung mit einem Wahlschalter (4) zum Vorwählen eines Tarifs versehen ist, wobei das zugeordnete Elektrogerät nur mit Spannung versorgt wird, wenn der vorgewählte Tarif oder ein billigerer Tarif gültig ist.

Die Anordnung wird am einfachsten in Form eines mobilen Steckdosengerätes ausgeführt.

FIG 1

## Anordnung zum Schalten eines Elektrogerätes in Abhängigkeit von einem jeweils gültigen Tarif

Die Erfindung betrifft eine Anordnung zum Schalten eines Elektrogerätes in Abhängigkeit von einem jeweils gültigen, über ein Stromnetz übertragenen Tarif für Stromnetze mit mindestens zwei Tarifen.

Eine derartige Anordnung ist aus der Schweizer Patentschrift 35 91 93 bekannt. Dabei ist in einen Heißwasserspeicher ein Rundsteuerempfänger fest eingebaut. Der Heißwasserspeicher wird nur dann eingeschaltet, wenn durch ein Rundsteuersignal ein Niedrigtarif signalisiert wird. Bei diesem Gerät sind die möglichen Einschaltzeiten fest an einen einzigen Tarif, z.B. den Nachttarif, gebunden.

Aus der PCT-Anmeldung WO 81/035 41 ist ein Elektrizitätszähler bekannt, bei dem über die Netzleitung Informationen über den momentanen Leistungsverbrauch, den aufsummierten Energieverbrauch und über den gültigen Tarif an eine Anzeigeeinheit übertragen werden, die z.B. in einem Verbrauchsschwerpunkt angeordnet sein kann. Bei dieser bekannten Anordnung wird der jeweils gültige Tarif lediglich angezeigt, führt aber zu keiner Schalthandlung. Durch Anzeige des Tarifs kann zwar der Verbraucher dazu angehalten werden, nicht zeitgebundenen Verbrauch in Niederlastzeiten zu legen, er ist jedoch dazu auf eine Beobachtung der Tarif-Anzeige angewiesen.

Mit den erwähnten Anordnungen soll eine Vergleichmäßigung des Strombedarfs und damit eine bessere Ausnutzung der Kraftwerks-und Netzkapazität erreicht werden. Dies gelingt mit den bekannten Anordnungen nur unvollkommen, da die feste Zuordnung der möglichen Einschaltzeit zu einem Tarif nur bei Speicherheizgeräten und Warmwasserspeichern möglich ist und die bloße Anzeige eines Tarifs sehr hohe Anforderungen an die Aufmerksamkeit des Verbrauchers stellt.

Aufgabe der Erfindung ist es daher, eine Anordnung derart auszuführen, daß eine Verlagerung des Energieverbrauchs in Schwachlastzeiten durch finanzielle Anreize ohne ständiges aktives Eingreifen des Verbrauchers möglich ist.

Diese Aufgabe wird erfindungsgemäß dadurch gelöst, daß die Anordnung eine Anzeigevorrichtung für den jeweils gültigen Tarif aufweist und mit einem Wahlschalter zum Vorwählen eines Tarifs versehen ist, wobei das zugeordnete Elektrogerät nur mit Spannung versorgt wird, wenn der vorgewählte Tarif oder ein billigerer Tarif gültig ist.

Damit kann der Verbraucher selbst festlegen, bis zu welchem Tarif er ein bestimmtes Gerät betreiben will. Aufgrund des jeweils gültigen Tarifs schaltet das Verbrauchsgerät dann selbständig ein bzw. aus. Der Verbraucher erhält einen durch die Tarifstruktur bestimmbaren finanziellen Anreiz, Verbrauchsgeräte soweit möglich in Niedertarifzeiten einzuschalten und damit zur Vergleichmäßigung des Stromverbrauchs beizutragen.

Die Anordnung kann vorteilhafterweise so ausgestaltet sein, daß eine Spannungsversorgung unterbrochen wird, sobald der gültige Tarif teurer wird als der vorgewählte.

Um zu verhindern, daß bereits begonnene Arbeitsabläufe, beispielsweise der Waschvorgang einer Waschmaschine, wieder unterbrochen werden, kann in einer vorteilhaften Ausführungsform die Unterbrechung der Spannungsversorgung erst nach Ablauf einer Verzögerungszeit ermöglicht werden.

Die Anordnung wird flexibel einsetzbar, wenn sie einen Stecker zum Anschluß an Steckdosen und eine Steckdose zum Anschluß eines Elektrogerätes aufweist.

Vorteilhafterweise kann die Anordnung so ausgeführt werden, daß beim Anschluß der Anordnung an das Netz die Anzeigevorrichtung solange blinkt, bis der jeweils gültige Tarif über das Stromnetz übertragen wurde. Damit wird signalisiert, daß der von der Anordnung angezeigte Tarif möglicherweise nicht mit dem gerade gültigen Tarif übereinstimmt.

In einer vorteilhaften Ausführungsform kann mittels des Wahlschalters ein Tarif manuell vorgewählt werden, wobei die Anzeige des eingestellten Tarifs solange blinkt, bis der gültige Tarif durch ein über das Stromnetz empfangenes Signal aktualisiert wird. Damit kann die Anordnung beim Einstecken auf einen Tarif eingestellt werden, von dem der Verbraucher z.B. aufgrund der Uhrzeit annimmt, daß dieser der gerade gültige ist.

Zweckmäßigerweise erfolgt die Umschaltung des jeweils gültigen Tarifs in der Anordnung durch Signale, die in einer Zentraleinheit aufgrund entsprechender Rundsteuersignale auf das interne Netz aufmoduliert werden. Dabei können in der Zentraleinheit die je nach EVU-Bezirk mit unterschiedlichen Rundsteuersystemen übermittelten Informationen in einen einheitlichen Code umgesetzt werden. Somit muß nicht jede einzelne Anordnung an das jeweils vorhandene Rundsteuersystem angepaßt werden.

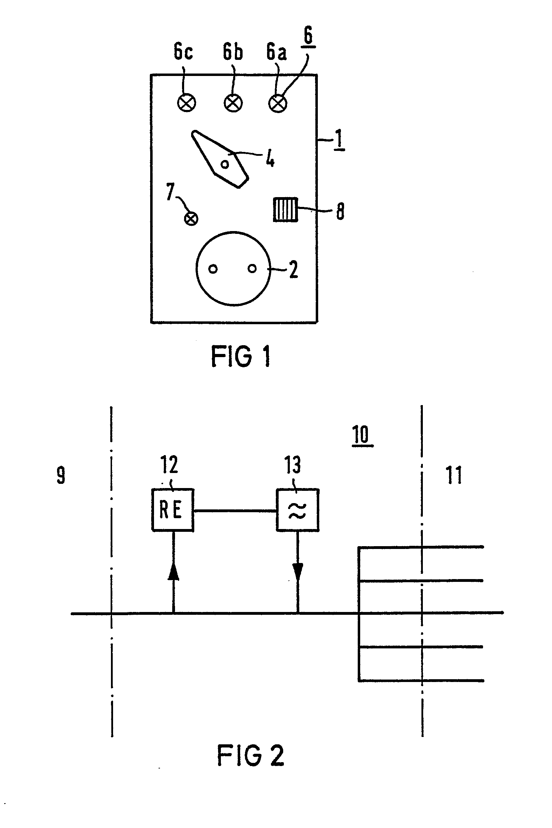

Ein Ausführungsbeispiel der Erfindung wird nachfolgend anhand der FIG 1 und 2 näher erläutert.

FIG 1 zeigt ein Ausführungsbeispiel der erfindungsgemäßen Anordnung in Draufsicht. Dabei sind als Anzeigevorrichtung drei Lämpchen 6a bis 6c vorgesehen, die jeweils die unterschiedlichen Tarifstufen (Hoch, Mittel, Niedrig) signalisieren. Die Zahl dieser Lämpchen muß der Zahl der Tarifstufen entsprechen. Alternativ könnte auch eine Anzeige in Geldeinheiten erfolgen.

Unterhalb der Anzeigevorrichtung 6 ist ein Wahlschalter 4 angebracht, der drei auf die Lämpchen 6a bis 6c hinweisende Stellungen aufweist. Schließlich ist die Anordnung noch mit einer Steckdose 2, einer Spannungsanzeige 7 und einem Akustikmelder 8 versehen. Auf der nicht dargestellten Rückseite der Anordnung 1 ist ein Stecker vorgesehen, mit dem die Anordnung in eine Steckdose eingesteckt werden kann. An die Steckdose 2 an der Vorderseite der Anordnung kann ein Elektrogerät angeschlossen werden.

Wenn bei dieser Anordnung der Wahlschalter 4 auf die höchste, beispielsweise dem Lämpchen 6a zugeordnete Tarifstufe eingestellt ist, so steht an der Steckdose 2 auf jeden Fall Spannung an, d.h., das angeschlossene Elektrogerät kann unabhängig vom jeweils gültigen Tarif betrieben werden. Die Spannungsanzeige 7 signalisiert, daß an der Steckdose 2 Spannung vorhanden ist.

Wenn der Wahlschalter 4 dagegen auf die mit dem Lämpchen 6b signalisierte mittlere Tarifstufe eingestellt ist, so steht an der Steckdose 2 nur dann Spannung an, wenn diese mittlere Tarifstufe oder die niedrigste Tarifstufe gültig ist.

Wenn schließlich der Wahlschalter 4 auf die niedrigste, durch das Lämpchen 6c signalisierte Tarifstufe eingestellt ist, steht an der Steckdose 2 nur bei Gültigkeit der niedrigsten Tarifstufe Spannung an.

Der Verbraucher kann somit wählen, ob er das angeschlossene Gerät in jedem Fall, nur während der Gültigkeit der mittleren oder niedrigsten Tarifstufe oder ausschließlich während der Gültigkeit der niedrigsten Tarifstufe betreiben will. Die Anordnung 1 kann auch so ausgeführt sein, daß nach einer manuellen Ein schaltung die Spannung ausgeschaltet wird, wenn ein vorgegebener Tarif überschritten wird oder ein ausgeschaltetes Gerät eingeschaltet wird, wenn ein vorgewählter Tarif unterschritten wird.

Ein Wechsel der Tarifstufen kann mit dem Akustikmelder 8 durch ein akustisches Signal angezeigt werden.

Wenn man die dargestellte Anordnung in eine Steckdose einsteckt, so liegt zunächst keine Information über den gültigen Tarif vor. Von den EVUs werden nämlich nur bei Tarifwechsel entsprechende Signale ausgesandt. Um zu signalisieren, daß die Anordnung keine Information über den gültigen Tarif aufweist, können die Lämpchen 6a bis 6c solange blinken, bis ein entsprechendes Signal eingetroffen ist. Es ist aber auch möglich, eine Vorwahl durch den Verbraucher durchzuführen, wobei dieser z.B. aufgrund der Tageszeit annehmen kann, daß ein bestimmter Tarif vorliegt.

Dazu wird der Wahlschalter 4 vor dem Einstecken der Anordnung in die dem angenommenen Tarif zugeordnete Stellung gebracht. Damit speichert die Anordnung zunächst diesen angenommenen Tarif ab. Um zu signalisieren, daß es sich hierbei nicht um die vom EVU übertragene Tarifinformation handelt, blinkt in diesem Falle nur das dem betreffenden Tarif zugeordnete Lämpchen 6a, 6b oder 6c.

Es ist möglich, daß das EVU Informationen über den jeweils nächstliegenden Tarif überträgt. Diese Information ist insofern wesentlich, da dann der Verbraucher weiß, ob er mit einem niedrigeren oder höheren Tarif zu rechnen hat, wenn er mit der Inbetriebnahme eines Elektrogerätes noch wartet. Eine solche Information wird daher zweckmäßigerweise in der Anzeige 6 angezeigt, indem z.B. das dem gültigen Tarif zugeordnete Lämpchen 6a, 6b oder 6c mit Dauerlicht leuchtet und das dem nächstfolgenden Tarif zugeordnete Lämpchen 6a, 6b oder 6c blinkt.

FIG 2 zeigt schematisch ein Beispiel, wie die vom EVU übermittelten Tarifsignale in hausinterne Signale umgesetzt werden können. Im EVU-Netz 9 sind Rundsteuersignale aufmoduliert, die entsprechende Umschaltsignale für Tarife enthalten. Durch einen Rundsteuerempfänger 12 in einer Zentraleinheit 10 werden diese Rundsteuersignale empfangen. Dabei muß der Rundsteuerempfänger 12 an das jeweilige EVU-Netz angepaßt sein, da die EVUs verschiedene Rundsteuersysteme einsetzen. Das aus dem Rundsteuersignal abgeleitete Tarifsignal wird einem Sender 13 zugeführt, der diese Signale in einheitliche Signale umsetzt und auf das Hausnetz 11 aufmoduliert. Damit kommt man mit einer einheitlichen Anordnung 1 für beliebige EVU-Netze aus. Ansonsten müßte jede Anordnung 1 eine Anpaßmöglichkeit für alle bei den EVUs eingesetzten Rundsteuersignale haben.

## Ansprüche

1. Anordnung zum Schalten eines Elektrogerätes in Abhängigkeit von einem jeweils gültigen, über ein Stromnetz übertragenen Tarif für Stromnetze mit mindestens zwei Tarifen, **dadurch gekennzeichnet,** daß die Anordnung (1) eine Anzeigevorrichtung (6) für den jeweils gültigen Tarif aufweist und mit einem Wahlschalter (4) zum Vorwählen eines Tarifs versehen ist, wobei das zugeordnete Elektrogerät nur mit Spannung versorgt wird, wenn der vorgewählte Tarif oder ein billigerer Tarif gültig ist.

2. Anordnung nach Anspruch 1, **dadurch gekennzeichnet,** daß eine Spannungsversorgung unterbrochen wird, sobald der gültige Tarif teurer wird als der vorgewählte.

3. Anordnung nach Anspruch 2,
**dadurch gekennzeichnet,** daß die Unterbrechung der Spannungsversorgung erst nach Ablauf einer Verzögerungszeit erfolgt.

4. Anordnung nach einem der Ansprüche 1 bis 3,
**dadurch gekennzeichnet,** daß die Anordnung (1) einen Stecker zum Anschluß an Steckdosen und eine Steckdose (2) zum Anschluß des Elektrogerätes aufweist.

5. Anordnung nach einem der Ansprüche 1 bis 4,
**dadurch gekennzeichnet,** daß beim Anschluß der Anordnung (1) an das Netz die Anzeigevorrichtung (6) solange blinkt, bis der jeweils gültige Tarif über das Stromnetz (9) übertragen wurde.

6. Anordnung nach einem der Ansprüche 1 bis 5,
**dadurch gekennzeichnet,** daß mittels eines Wahlschalters (4) ein Tarif manuell vorgewählt werden kann und daß die Anzeige (6) des eingestellten Tarifs solange blinkt, bis der gültige Tarif durch ein über das Stromnetz empfangenes Signal aktualisiert wird.

7. Anordnung nach einem der Ansprüche 1 bis 6, wobei vom EVU über das Stromnetz ein Vorsignal für den jeweils nächstfolgenden Tarif gesendet wird,
**dadurch gekennzeichnet,** daß zusätzlich zum aktuellen Tarif auch der nächstfolgende Tarif angezeigt wird.

8. Anordnung nach einem der Ansprüche 1 bis 7,
**dadurch gekennzeichnet,** daß die Anordnung (1) mit einer Spannungsanzeige (7) für die Steckdose (2) ausgeführt ist.

9. Anordnung nach einem der Ansprüche 1 bis 8,
**dadurch gekennzeichnet,** daß die Anordnung (1) mit einem Akustikmelder (8) ausgeführt ist, der das Umschalten der Tarife akustisch meldet.

10. Anordnung nach einem der Ansprüche 1 bis 10,
**dadurch gekennzeichnet,** daß die Umschaltung des jeweils gültigen Tarifs in der Anordnung (1) durch Signale erfolgt, die in einer Zentraleinheit (10) aufgrund entsprechender Rundsteuersignale auf das interne Netz aufmoduliert werden.

87 P 3107

FIG 1

FIG 2